# EUROPEAN PATENT APPLICATION

(11) **EP 0 653 551 A2**
(43) Date of publication of application: **17.05.1995**
(21) Application number: 94308105.9
(22) Date of filing: 03.11.1994
(51) Int. Cl.: F01N 3/20, F01N 3/28

(54) **Catalyst system for internal combustion engine**

(30) Priority: 16.11.1993 GB 9323597
(71) Applicant: TICKFORD LIMITED, Milton Keynes Buckinghamshire MK14 5BN (GB)
(72) Inventor: Sykes, Richard Geoffrey, Cranfield, Bedford MK43 0DL (GB)
(74) Representative: Gregory, Timothy Mark

(57) **Abstract**

The catalyst system for an exhaust from an internal combustion engine has at least two valve controlled exhaust outlet ports for each cylinder. A first catalyst bed (1) is adapted to interact selectively with the entire exhaust gas of the engine. A second catalyst bed (8) is disposed at a located closer to the engine exhaust than the first catalyst bed (1). Output of the second catalyst bed (8) is passed to the exhaust from said engine at a point prior to its input to the first catalyst bed (1).
Inlet to the second catalyst bed (8) is from one of the exhaust outlet ports which is so controlled as to allow exhaust gas flow preferentially during a predetermined time. Other of the exhaust outlet ports of each cylinder are so controlled as to allow exhaust gas flow at other predetermined times directly to the first catalyst bed (1) along such a flow path as to avoid the second catalyst bed (8). The system allows rapid catalytic conversion of exhaust gases upon start up of the engine but prevents overheating and therefore deterioration of the initially used converter.

## Description

The present invention relates to a catalyst system for an internal combustion engine. More particularly but not exclusively it relates to a selective catalyst system for use during an initial start-up period of engine operation.

It is known to pass exhaust gases from an internal combustion engine over or through a catalyst bed to remove noxious gases, such as nitrogen oxides, unburnt hydrocarbons and carbon monoxide, and thereby to reduce pollution generally from internal combustion engine exhaust gases.

However, it is also well known that catalysis is most effective when the catalyst bed reaches a certain temperature. This temperature is usually achieved by heat transfer from the hot gases being catalytically converted to less noxious gases and/or from heat generated during conversion.

Hence cold-start conditions of engine operation tend to emit a greater amount of pollution than steady-state conditions, assuming an existing catalyst system is employed.

A disadvantage is that the catalyst chemistry and/or the substrate structure may be damaged by high temperatures such as may be experienced close to the engine at high speeds and loads, and it is generally necessary to separate the catalyst bed from the engine, whereby the exhaust gas is cooled to an acceptable level. However, this means that the catalyst bed takes longer to reach an optimum operating temperature.

Such a remote catalyst bed may be heated electrically but this can prove a drain of a battery or batteries of the car.

It has been proposed to employ an additional catalyst bed which may be electrically heated (in some cases, either preheated or with the heater switching on immediately after use of the starter motor and switching out at a predetermined time thereafter). The predetermined time is such that the temperature of the catalyst bed may be maintained by the heat of the exhaust gases.

Another suggestion is to provide a close coupled catalyst bed, i.e. one close to the engine. However, the temperature of the exhaust gases may soon cause the working temperature of the bed to become so high as to reduce the effectiveness of the catalyst, and may cause permanent deterioration thereof.

Hence, after a period, the exhaust gases need to bypass such a close coupled bed. In this time, the heat of the exhaust gases should have raised the temperature of a main catalyst bed so that it is effective.

However diversion of the exhaust gases around such a close coupled starter catalyst bed to pass directly to a main catalyst bed has required a mechanically operated valve. This may require a complex operating mechanism and is, of course, prone to occasional failure.

It is an object of the present invention to provide a catalyst system which overcomes or obviates the disadvantages set out above.

According to the present invention there is provided a catalyst system for an exhaust from an internal combustion engine having at least two valve controlled exhaust outlet ports for each cylinder thereof, the system comprising a first catalyst bed adapted to interact selectively with the entire exhaust gas of said engine, a second catalyst bed disposed at a location closer to the engine exhaust than the first catalyst bed, an output of said second catalyst bed being passed to the exhaust from said engine at a point prior to its input to said first catalyst bed, an inlet to said second catalyst bed being from one of said exhaust outlet ports which is so controlled as to allow exhaust gas flow preferentially during a predetermined time, and other of said exhaust outlet ports of said cylinder being so controlled as to allow exhaust gas flow at other predetermined times directly to said first catalyst bed along such a flow path as to avoid said second catalyst bed.

Preferably each cylinder of the engine has a least two exhaust ports, each separately controllable by a respective valve.

In this case, a first one of said ports may communicate directly with the first catalyst bed.

A second one of said ports may communicate directly with the second catalyst bed.

The area of each of said first ports (and the exhaust tract leading therefrom) or the total area of a plurality of such first ports may preferably be greater than the area of each of said second ports or the total area of a plurality of such second ports (and the exhaust tract leading therefrom).

Respective valves controlling said first and second ports are preferably selectively operable by means of one or more respective pin means operable, optionally by hydraulic actuation, to engage between a cam operated follower, used during continuous operation, and a connection engageable therewith for operation during a predetermined time.

Alternatively each of the valves may be selectively operable by electrical or solenoid means, acting either directly or by electrically controlling fluid flow to a hydraulic system.

Each of said first and second catalyst beds may comprise a honeycomb structure of alumina or other substrate, optionally coated with a wash or solution including ceria, and provided with a precious metal or other catalyst, such a platinum, palladium and/or rhodium, distributed in crystallite sites over the surface of said coated substrate.

Each of said catalyst beds may be controlled to operate at a temperature between 150°C and 1000°C, preferably in the region of 250-850°C, advantageously in the region of 400-500°C.

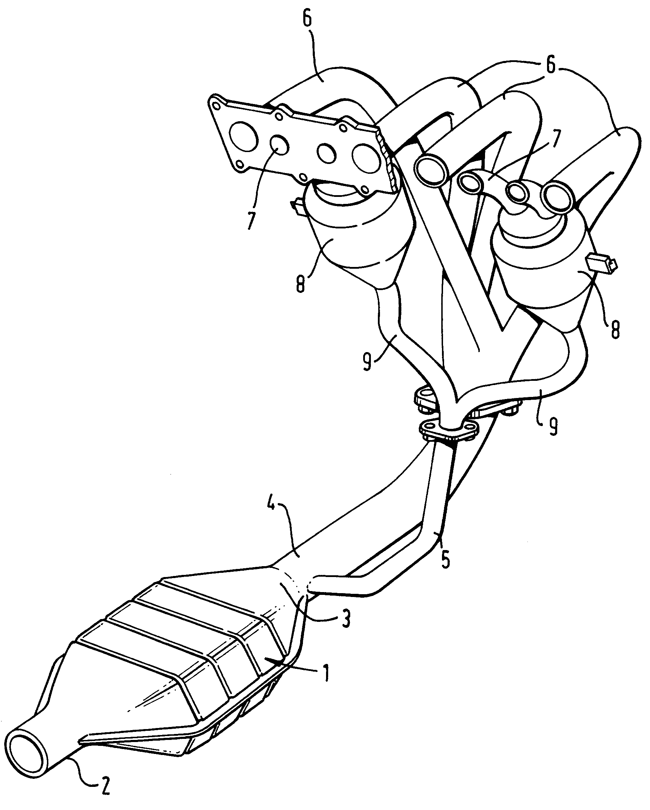

An embodiment of the present invention will now be more particularly described by way of example and with reference to the accompanying drawings, the single figure of which shows a part of an engine exhaust system incorporating catalytic converters in an exhaust emission pathway.

Referring now to the drawing, there is shown a first catalytic converter 1, the output of which passes via pipe 2 to an exhaust outlet of the vehicle in which the system is installed. Such a converter is well known. Input to the converter 1 is through inlet 3 which follows a junction of a first exhaust pipe 4 and a second exhaust pipe 5. The first exhaust pipe 4 leads directly from an exhaust manifold of the cylinders (not shown) of the engine, and connects with the cylinders by exhaust pipes or tracts 6 - shown schematically with one pipe 6 leading from each cylinder of such an engine. These exhaust pipes 6 connect with exhaust pipe 4.

Additional outlet pipes or tracts 7 lead from the cylinders of the engine to second catalytic converters 8 located more adjacent to the engine 7 than is the primary converter 1. In this illustrated case there are two second converters 8, each connected to two cylinders of the engine. However, more or less could be provided, e.g. one per cylinder.

Outlets 9 of the second converters 8 connect into the second exhaust pipe 5 and pass converted hot gas to the junction comprised upstream of inlet 3 of the first converter 1. It is preferred to have a second converter 8 for each one or two cylinders of the engine but it would be possible to have a single second converter 8 applied to the exhaust of three or more cylinders.

As shown, each cylinder has two exhaust ports connected respectively to pipes or tracts 6 and 7. First exhaust pipeways 6 may be of greater area than are second exhaust pipeways 7. These first exhaust pipes 6 communicate directly with inlet 3 to the primary first catalytic converter 1.

The second pipes 7 communicate with a respective one of the second catalytic converters 8. The catalyst beds in these second converters 8 are heated either electrically, by the combustion gases or by other suitable means during an initial start-up time, which could be several minutes. During this period the valves for the larger area ports leading to pipes 6 remain closed and the entire exhaust passes through pipes 7 to the heated second converters 8. The hot exhaust therefrom passes to the first converter 1, which gradually becomes more effective as it is heated by the hot cleaned gases passing over or through it.

After a predetermined time, usually several minutes, or when a sensor, timer or other indicator indicates that a predetermined temperature has been attained within converter 1, the valve action is reversed with valves controlling second ports remaining closed while valves controlling first pores open and close as normal during the cycles of the cylinders of the engine. The engine then operates normally. Each cylinder may have one, two or more valves controlling ports connected to pipes 7, and similarly one or more valves controlling ports connected to pipes 6.

During normal (post start-up) operation, it could be arranged that the valves controlling second ports remain operational in addition to the valves controlling first ports, opening and closing during the cycle of the engine.

Each catalyst bed 1 or 8 may consist of a metal, ceramic or other substrate, preferably alumina, optionally washed with a solution containing ceria (which may absorb catalytically useful oxygen during some cycles of the engine for release during another cycle), and precious metal (Pt, Pd, Rh or the like) or other suitable catalyst deposited thereon as crystallite sites.

The catalyst is intended to reduce nitrogen oxides, to convert unburnt hydrocarbon gases to water and to oxidise carbon monoxide. As stated above, the catalyst is most effective when at a temperature in the region above 400°C. When the temperature is below about 150°C, catalytic activity is diminished. At a temperature of about 1000°C or more, the catalyst may become irrevocably damaged.

Hence the second converters 8 should not be used, if possible, once the temperature of exhaust gas reaches a high level on warm-up of the engine. The catalyst contained in them could become less effective.

However, the proximity of the second converters 8 to their respective exhaust ports, and the electrical or other heating which may optionally be provided, enables effective conversion of the exhaust gas during an early start-up period of engine operation. The still-hot exhaust gases therefrom are fed to the first converter 1 and serve to warm the catalyst bed therein. Once it has become sufficiently heated, it is preferably used exclusively, thereby preventing the second converters 8 from overheating and possible catalyst damage. However, in some cases, both catalytic converters 1 and 8 may be used together.

The change of operation of valves controlling the first and second ports is accomplished by means of valve operation according to what is known as an Eaton System. That is to say, the valves controlling first exhaust ports, and the valves controlling second exhaust ports may be controlled by respective two part cam followers, the parts of which may be connected together at an appropriate point of travel by means of a respective pin which may be engaged or disengaged by hydraulic means under time or temperature sensor control.

Alternative systems may be employed, for example, solenoid controlled valves, either actuating directly or via hydraulic means. Other electric control could be used, preferably influenced by an on-board computer.

As can be seen, the invention permits the advantages of close coupled catalyst beds but avoids the need for separate bypass valves to preserve the efficiency of such close coupled catalyst beds.

It is well known to use multiple exhaust port cylinders in internal combustion engine, and the invention enables utilisation of the valves selectively, during start-up and continuous-run conditions.

Advantages may be obtained by using smaller exhaust valves and tracts during start-up since not only is reduced emission of noxious gases achieved earlier, but engine torque is adequate for low load/low speed operation of the vehicle.

## Claims

1. A catalyst system for an exhaust from an internal combustion engine having at least two valve controlled exhaust outlet ports for each cylinder thereof, characterised in that the system comprises a first catalyst bed (1) adapted to interact selectively with the entire exhaust gas of said engine, a second catalyst bed (8) disposed at a location closer to the engine exhaust than the first catalyst bed, an output (9) of said second catalyst bed being passed to the exhaust (4) from said engine at a point (3) prior to its input to said first catalyst bed (1), an inlet (7) to said second catalyst bed (8) being from one of said exhaust outlet ports which is so controlled as to allow exhaust gas flow preferentially during a predetermined time, and other of said exhaust outlet ports of said cylinder being so controlled as to allow exhaust gas flow at other predetermined times directly to said first catalyst bed (1) along such a flow path as to avoid said second catalyst bed (8).

2. A catalyst system as claimed in Claim 1, characterised in that each cylinder of the engine has a least two exhaust ports, each separately controllable by a respective valve.

3. A catalyst system as claimed in Claim 2, characterised in that a first one of said ports communicates directly with the first catalyst bed (1).

4. A catalyst system as claimed in Claim 2, characterised in that a second one of said ports communicates directly with the second catalyst bed (8).

5. A catalyst system as claimed in Claim 2, characterised in that the area of each of said first ports (and the exhaust tract leading therefrom) or the total area of a plurality of such first ports is greater than the area of each of said second ports or the total area of a plurality of such second ports (and the exhaust tract leading therefrom).

6. A catalyst system as claimed in any of the precediing claims, characterised in that respective valves controlling said first and second ports are selectively operable through selective operation, optionally by hydraulic actuation, of one or more respective pin means operable to engage and actuate respective cam operated followers, during a predetermined time.

7. A catalyst system as claimed in any one of Claims 1 to 5, characterised in that each of the valves is selectively operable by solenoid means, acting dither directly or by electrically controlling fluid flow to a hydraulic system.

8. A catalyst system as claimed in any of the preceding claims, characterised in that each of said first and second catalyst beds comprises a honeycomb structure of alumina or other substrate, optionally coated with a wash or solution including ceria, and provided with a precious metal or other catalyst, such as platinum, palladium and/or rhodium, distributed in crystallite sites over the surface of said coated substrate.

9. A catalyst system as claimed in any one of the preceding claims, characterised in that each of said catalyst beds is controlled to operate at a temperature between 150°C and 1000°C.

10. A catalyst system as claimed in Claim 9, characterised in that each of said catalyst beds is controlled to operate at a temperature in the region of 250-850°C.

11. A catalyst system as claimed in Claim 10, characterised in that each of said catalyst beds is controlled to operate at a temperature in the region of 400-500°C.
